# EUROPEAN PATENT SPECIFICATION

(11) **EP 3 465 426 B1**
(45) Date of publication and mention of the grant of the patent: **06.12.2023**
(21) Application number: 17730023.3
(22) Date of filing: 05.06.2017
(51) Int. Cl.: G06F 9/451

(54) **USER INTERFACE WITH MOVABLE MINI-TABS**
BENUTZERSCHNITTSTELLE MIT BEWEGLICHEN MINI-REGISTERKARTEN
INTERFACE UTILISATEUR DOTÉ DE MINI-ONGLETS AMOVIBLES

(30) Priority: 06.06.2016 US 201662346156 P
(43) Date of publication of application: 10.04.2019
(73) Proprietor: Hexagon Technology Center GmbH, 9435 Heerbrugg (CH)
(72) Inventor: WHITE, Michele B., Madison Alabama 35757 (US); COX, JR., William B., Williamsburg Virginia 23185 (US)
(74) Representative: Kaminski Harmann
(86) International application number: PCT/US2017/035979
(87) International publication number: WO 2017/214045

(56) References cited:
- US-A1- 2002 070 977
- Anonymous: "Ribbons", Windows - Dev Center - Desktop online, 30 September 2013 (2013-09-30), pages 1-27, XP055208923, Retrieved from the Internet: URL:https://web.archive.org/web/2013093010 1235/http://msdn.microsoft.com/en-us/libra ry/windows/desktop/cc872782.aspx [retrieved on 2015-08-21]
- "Cascading Style Sheets - Wikipedia, the free encyclopedia", , 16 April 2013 (2013-04-16), XP055215799, Retrieved from the Internet: URL:https://en.wikipedia.org/w/index.php?t itle=Cascading_Style_Sheets&oldid=55058454 3 [retrieved on 2015-09-23]
- Anonymous: "UIML - Wikipedia", , 18 March 2016 (2016-03-18), pages 1-2, XP55802508, Retrieved from the Internet: URL:https://en.wikipedia.org/w/index.php?t itle=UIML&oldid=710732225 [retrieved on 2021-05-07]

## Description

### Technical Field

The present invention relates to solving a problem related to the presentation of information to be displayed on a graphical user interface for a computer, and more particularly to providing increased flexibility in the display of user interface controls with reduced complexity in the programming of the user interface.

### Background Art

Graphical user interface (GUI) architectures known in the art typically follow the Model-View-Controller (MVC) design pattern. As might be surmised, an MVC design includes three components, which for purposes of illustration are described herein using the example of a power plant. The model encapsulates the data and logic of the system, for example the temperature of a furnace as captured by a sensor (data), or the triggering of an alarm if the temperature exceeds a certain bound (logic). The view provides a visual representation of the model to the operator, and may include a graphical display of the furnace temperature using numbers and/or suggestive colors (e.g. green to signify operation within a normal range, red for too hot, and blue for too cold). The controller enables the operator to alter the system, for example by providing a control that opens or closes a valve to regulate the temperature. Thus, a user may react to data presented in the view by operating a control, which performs some function that affects the sensed data that are inputs to the model, and an updated view is presented. Thus, in the language of control theory, the system acts as a closed-loop controller.

The Model-View-View Model (MWM) design pattern is an architectural refinement of MVC that addresses the limitations of its implementation in a programming language. In standard MVC, the view must be designed with an understanding of specific data names, data access procedures, and other functional processes that occur in the model. Thus, a change in the model may require a technically complex (and potentially expensive) redesign of the view. MWM solves this problem by functionally separating the view from the model using an intermediary component called a "view model." In the MWM pattern, the view component is designed by referring to certain data or procedures, without regard to their implementation, using a view-space name that may be entirely different than the name used by the model. These view-space names are associated ("bound") to the names of data and procedures in the model by the intermediary view model construct; thus, the design is sometimes called Model-View-Binder.

In MWM, namespace associations are typically stored in configuration files in a markup language such as the Extensible Application Markup Language (XAML). These configuration files are processed by the view model software, typically upon startup. Thus, changes to the data or logic of the model may only require changes to the configuration files, not to the underlying program code, simplifying software development processes. This abstraction permits the view designers to focus on providing an optimal user interface experience. Having an additional layer of abstraction between the view and the model, namely the view model, also provides a logical place for data manipulation done solely for the purpose of display, and not because the model requires it; such manipulation otherwise would have to be awkwardly fit into either the view or the model.

US 2002/070977 A1 shows a method for displaying and manipulating various controls in a system that uses a graphical user interface.

### Summary of Illustrative Embodiments

Illustrative embodiments of the invention improve on the prior art by permitting a user to tailor display of the GUI controls according to a preferred layout. With respect to a computer-aided design (CAD) system especially, in which vertical and horizontal space on a display screen may be at a premium, illustrative embodiments advantageously enable the user to choose between multiple on-screen layouts of functions that pertain to a particular command. In particular, the user may cause groups of functions, displayed by the view component in a fixed area of the screen, to be re-laid out by the view component in a movable component, and vice versa. Also advantageously, illustrative embodiments improve on the MVC design pattern by using a non-programmatic abstraction layer between the view component and the controller component. While the non-programmatic aspect of an implementation may use XML or XAML, the similarity to MWM is only superficial, as XML and XAML are industry standards that may be put to an endless variety of purposes, and illustrative embodiments actually use these markup languages for a purpose not found in MVVM, namely to instruct the view component how to lay out multiple different views of the same controller commands, subcommands, and functions.

The subject-matter for which protection is sought is defined by the appended claims.

Therefore, a first embodiment of the invention is an apparatus for displaying a graphical user interface (GUI) of a software application having a plurality of commands. The apparatus includes at least one computing processor that is communicatively coupled to a display screen. The at least one computing processor is configured to cause display, on the display screen, of the GUI of the software application generated by a layout engine according to a first graphical layout, and responsive to receiving a re-layout instruction from a user of the software application, cause display, on the display screen, of the GUI of the software application generated by the layout engine according to a second graphical layout. The first layout includes a fixed area having a contextual tab in which is contained a first plurality of grouped controls, each such control pertaining to a function of a selected command in the plurality of commands. The second layout includes (1) a movable component in which is contained the first plurality of grouped controls, and (2) a fixed area having a non-contextual tab in which is contained a second plurality of grouped controls, each such control pertaining to a command in the plurality of commands.

The layout engine generates the GUI of the software application by retrieving, from a command framework, a first collection including: a group of commands, or a group of functions that pertain to a single command, or a second collection, or any combination of these. The layout engine further operates by, when the first collection includes a group of commands or a group of functions, ordering the respective commands or functions according to a user experience guideline. The layout engine also operates by laying out each group of commands or functions according to whether the first graphical layout or the second graphical layout should be displayed.

Variations on this apparatus are contemplated. The layout engine may further operate by, when the first graphical layout should be displayed, laying out each group of commands or functions by showing a textual label, or by showing icons each having a first size, or both; and when the second graphical layout should be displayed, laying out each group of commands or functions by not showing the textual label, and by showing icons each having a second size that is smaller than the first size. Or, it may further operate by, when the second graphical layout should be displayed, laying out a group of functions using a bounding box having a fixed width. Or, it may further operate by, when the first collection includes a second collection, recursively processing the second collection to form a nested layout. Or, it may further operate by displaying the fixed area in the shape of a tabbed ribbon. In one variant, the at least one computing processor is further configured to cause display, on the display screen, of the GUI of the software application according to the first graphical layout, in response to receiving another re-layout instruction from the user of the software application. In another variant, the apparatus includes a memory, wherein the at least one computing processor is further configured to store, in the memory, a datum indicating whether the GUI should be displayed according to the first graphical layout or the second graphical layout.

Another embodiment of the invention is a method of displaying, on a display screen, a graphical user interface (GUI) of a software application having a plurality of commands. The method includes causing display, on the display screen by a computing processor, of the GUI of the software application generated by the layout engine according to the first graphical layout described above, and responsive to receiving a re-layout instruction from a user of the software application, causing display, on the display screen by the computing processor, of the GUI of the software application generated by the layout engine according to the second graphical layout. The layout engine generates the GUI of the software application as described above. Variants of the method embodiment are contemplated in which the layout engine is modified as described above in variants of the apparatus embodiment. In other variants, the method includes causing display, on the display screen, of the GUI of the software application according to the first graphical layout, in response to receiving another re-layout instruction from the user of the software application. In still other variants, the method includes storing, in a memory, a datum indicating whether the GUI should be displayed according to the first graphical layout or the second graphical layout.

Another embodiment of the invention is a tangible, computer-readable storage medium in which is non-transitorily stored program code that, when executed by a computing processor, provides the method embodiment described above. The storage medium embodiment may be varied to include additional program code that, when executed by the computing processor, provides the variants of the method described above.

### Brief Description of the Drawings

The foregoing features of embodiments will be more readily understood by reference to the following detailed description, taken with reference to the accompanying drawings, in which:
Fig. 1 shows a graphical user interface (GUI) having a ribbon with a plurality of tabs that group different commands, in accordance with an embodiment of the invention;
Fig. 2 shows a portion of the GUI of Fig. 1, after selection of a command;
Fig. 3 shows the GUI of Fig. 1, including a pop-up menu asking the user whether to re-layout the functions of the command as a relocatable mini-tab;
Fig. 4 shows the GUI of Fig. 1, where the functions of the command have been re-laid out as a relocatable mini-tab;
Fig. 5 shows the GUI of Fig. 1, where the mini-tab has been relocated;
Fig. 6 shows a pop-up dialog for use with the GUI of Fig. 1;
Fig. 7 shows a global preferences screen for the GUI of Fig. 1, including GUI controls relevant to an embodiment of the invention;
Fig. 8 schematically shows different programmatic elements for use in an embodiment of the invention;
Fig. 9A is a flowchart showing processes of an embodiment of the invention;
Fig. 9B is a flowchart showing processing of a layout engine in the embodiment of Fig. 9A;
Fig. 10 schematically shows an apparatus in which the invention may be embodied; and
Fig. 11 schematically shows a part of one example of a large-scale capital project that may be managed by a plant design program using illustrative embodiments of the invention.

### Detailed Description of Specific Embodiments

Definitions. As used in this description and the accompanying claims, the following terms shall have the meanings indicated, unless the context otherwise requires:

A "computing processor" is a manufacture capable of electronically executing a sequence of instructions that perform a computation.

A "memory" is a manufacture capable of electronically storing data and retrieving stored data.

A "display screen" or "display device" is a manufacture capable of visually presenting information to an observer.

A "computer process" is a process used by a computer or computer system, especially within a computing processor, to perform a computation.

An "executable program" (or "program") is a sequence of instructions that perform a computation when executed by a computing processor as a computer process.

A "computer application" (or "application", in context) is a combination, of one or more programs with any data related thereto, that performs one or more related computations.

A "graphical user interface" (GUI) is an arrangement of information, provided by an application for display on a display device, that allows a user to interact with the application, through the use of graphical icons and text. As used herein, the term GUI does not include a "command line interface" (CLI), as that phrase is understood in the art. As is known in the art, an application may execute on one electronic device (e.g. a server computer), while a GUI for the application is displayed on a different electronic device (e.g. the display screen of a client computer).

Specific embodiments of the invention allow a user to control the layout of groups of controls for commands, sub-commands, and contextual functions in the GUI of an application, while advantageously enabling more efficient development of the application, including by reducing programming errors and by providing a layer of abstraction between particular functions of the application (namely, the view and the view model). This is especially important in computer-aided design (CAD) applications, whose hierarchy of commands and functions tend to be complex and for which display screen space may be at a premium.

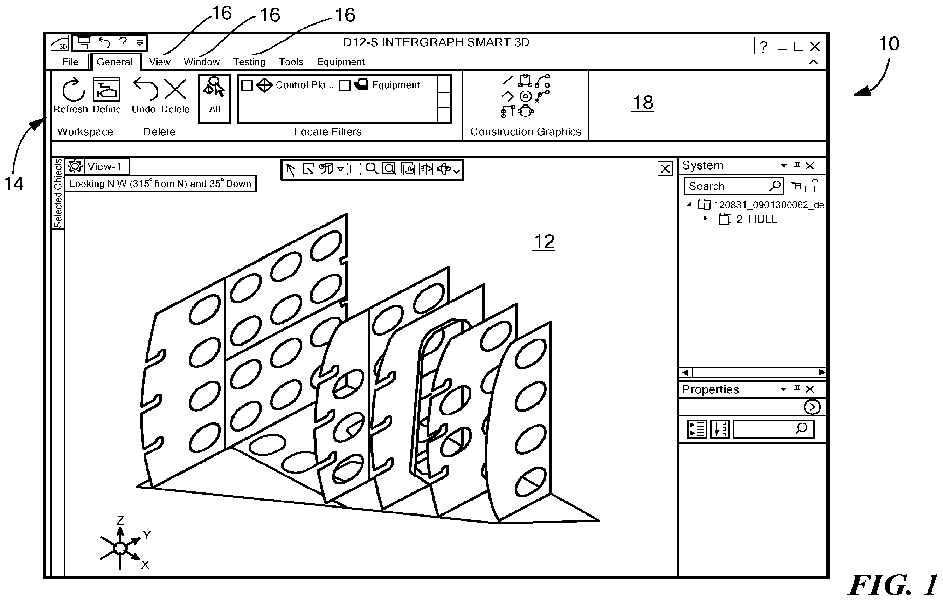

Several figures illustrate the capabilities of an embodiment of the invention. Fig. 1 shows a graphical user interface (GUI). The GUI 10 includes a main work area 12 and a tabbed ribbon 14, each occupying a fixed area. The tabbed ribbon 14 groups various commands into a series of tabs, each having a tab selection area 16; in Fig. 1, for example, the "General" tab is selected and a ribbon 18 for this tab is shown.

When a tab selection area 16 is selected, the GUI 10 displays a multi-command tab having a fixed ribbon area containing a collection of icons and input areas, organized into command subgroups. Thus, in Fig. 1, the "Workspace" subgroup includes the "Refresh" and "Define" command icons, while the "Delete" subgroup includes the "Undo" and "Delete" command icons, and so on. The command icons act as selectable controls in the MVVM design pattern, so that when a command icon is selected, the software application executes a corresponding command. Some of the commands may be disabled depending on the state of the main work area 12. For example, in Fig. 1 the "Delete" command is disabled (and its corresponding control icon and text are shown in gray) because no component in the main work area 12 is highlighted for deletion.

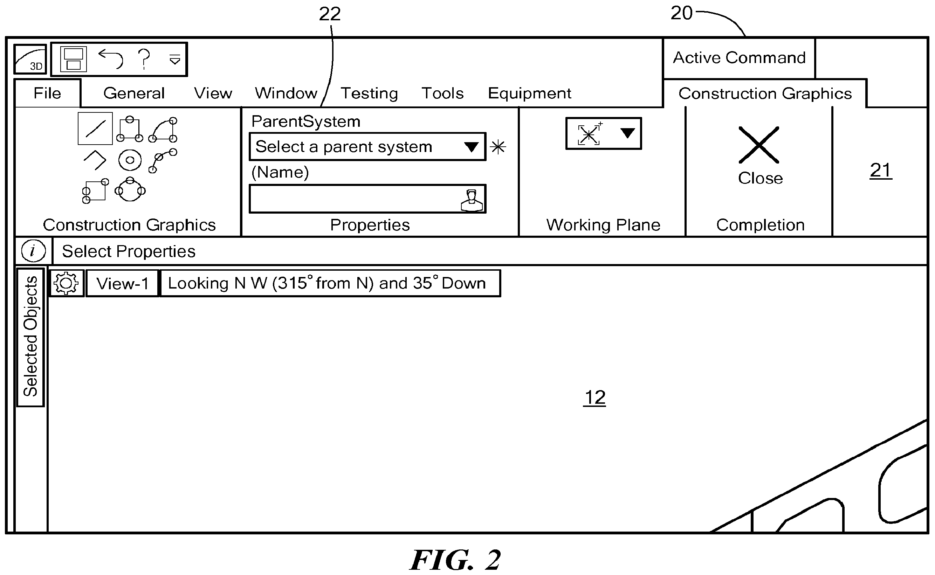

Fig. 2 shows a portion of the GUI of Fig. 1, after selection of a command. In this case, a control icon in the "Construction Graphics" group of the "General" tab was selected. Having received the selection of this control icon, and activation of its corresponding command, the GUI of Fig. 2 now shows a new contextual tab 20, entitled "Active Command" which includes an active command ribbon 21 entitled "Construction Graphics". The title "Active Command" indicates to the user that the contextual tab 20 pertains to an active command, and the subtitle indicates the context of the active command ribbon 21. A contextual tab 20 differs from a multi-command tab 18 in that the GUI displays, in the fixed area of the ribbon, various contextual functions that pertain to the selected command. Controls for these functions are likewise grouped into collections; for example, the "Properties" group of controls 22 includes a pulldown menu captioned "ParentSystem", and a text input captioned "(Name)". These input areas permit the user to control how the selected, active command is executed in the main work area 12.

This layout of functions in the active command ribbon 21 presents the user with group and control labels that help the user understand what input is needed in the different controls. This layout is useful when the user is unfamiliar with a selected command. However, an experienced user of the command may not need the labels, and may want to have the controls closer to where she is working (including on another display screen).

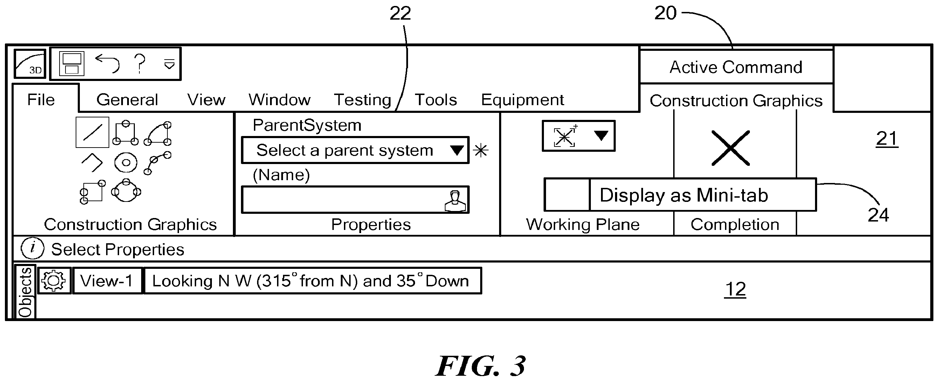

To solve this problem, illustrative embodiments of the invention permit the functions displayed in the active command ribbon 21 of the contextual tab 20 to be re-laid out using less screen space, according to a user preference. Advantageously, the re-layout may be done using information already required to layout the functions of the command in the active command ribbon 21, as described below. Thus, as shown in Fig. 3, the user may right click in the active command ribbon 21 using the GUI, or provide another appropriate input, to cause display of a selectable menu 24 that reads "Display as mini-tab." It should be appreciated that this label is only suggestive, and other embodiments may use a different input method.

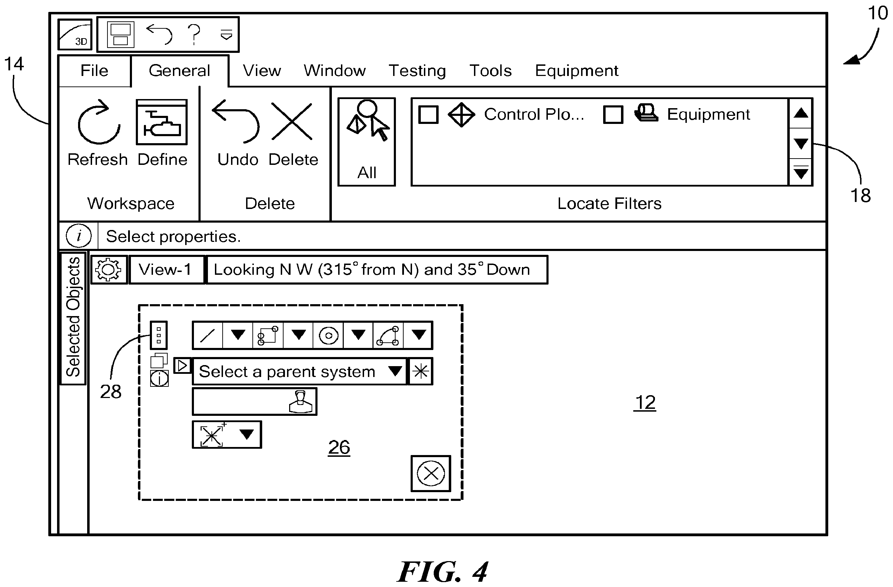

Upon selection of the menu 24 using the GUI, an embodiment of the invention relays out the contextual functions pertaining to the command as a display component 26, or "mini-tab," that is movable within the GUI 10, as shown in Fig. 4. It should be appreciated that the dashed lines surrounding the display component 26 are shown only for clarity of this description, and may not appear visible in the GUI 10.

In accordance with the re-layout, all of the same functions in the active command ribbon 21 preferably are present in the display component 26. Advantageously, particularly for smaller display devices (e.g., handheld devices), the corresponding icons and input areas now use less screen area and are movable by dragging the gripper button 28. Moreover, the ribbon 14 now displays the multi-command ribbon 18, rather than the active command ribbon 21.

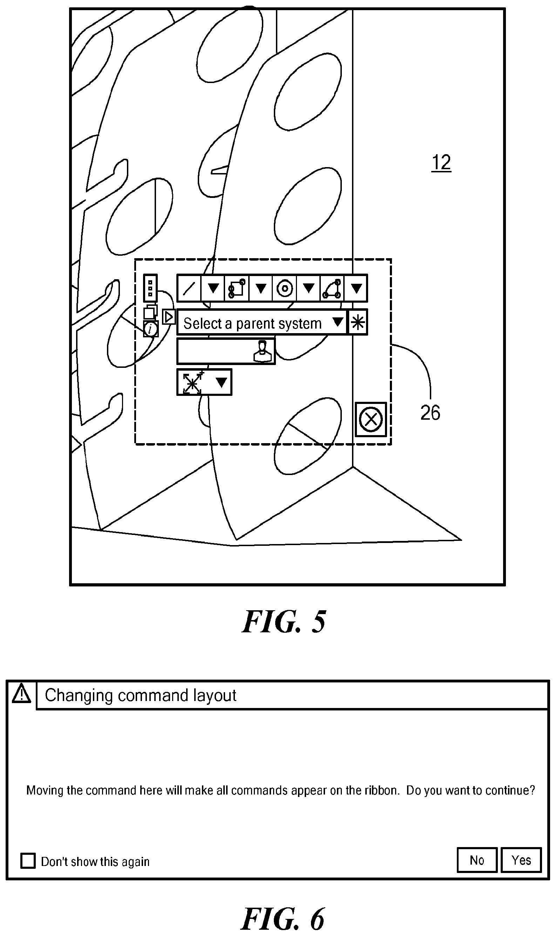

The display component 26 may be moved anywhere within the main work area 12, for example as shown in Fig. 5. Alternative embodiments may permit the display component 26 to be displayed in only selected areas of the main work area 12. To restore the original layout, the display component 26 can be dragged back into the multi-command ribbon 18. In this event, the software application may provide a pop-up dialog to confirm the layout change, as shown in Fig. 6. If Yes is selected, the layout engine converts the command back to the ribbon layout (as it appears in Figs. 2 and 3) and will display commands on the active command ribbon 21.

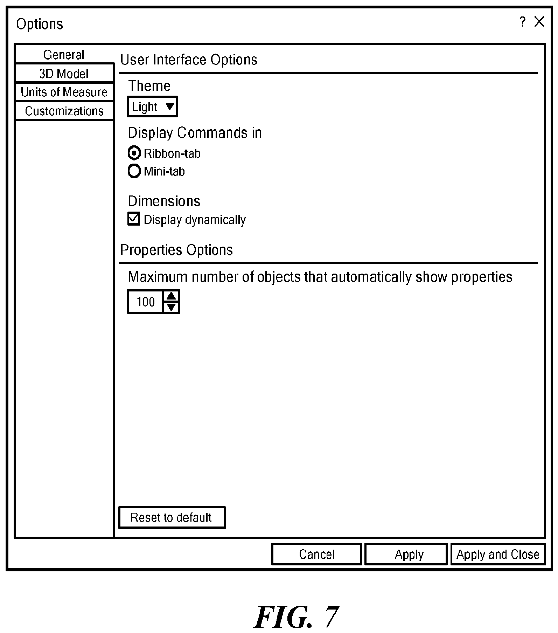

To facilitate determining which layout should be shown, the software application may maintain a global datum that indicates whether to display each laid out group of controls in the fixed area of the ribbon 14, or as the display component 26, which, as noted, is movable within the main work area 12 of the GUI. Fig. 7 shows a global preferences screen for the GUI of Fig. 1, including a radio button selector for setting the global layout indication.

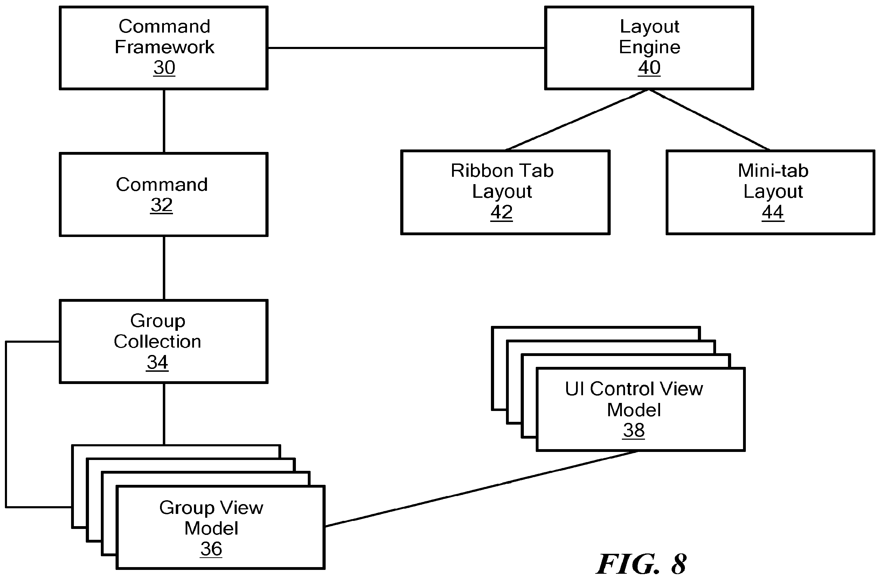

Fig. 8 schematically shows different programmatic elements for use in an embodiment of the invention, and their relationships. The top level logical component is a command 32. Each command 32 includes a group collection 34, which groups the functions of each command 32 as described in connection with Figs. 2 through 5. Each group collection 34 defines one or more individual groups of functions or commands, and each group has a group view model 36. Each such group view model 36 defines a view model for the functions that are displayed in the group using a corresponding individual user interface (UI) control view model 38. Bindings between data and functions in each UI control view model 38 and corresponding data and functions in the data model or business logic of the software application, in turn, may be defined using XAML or other appropriate configuration data as known in the art.

A layout engine 40 populates the GUI 10 with visible items according to a user preference between contextual tab display and mini-tab display. Individual commands 32 do not communicate directly with the layout engine 40. Instead, a command framework 30 provides information from a command 32 to the layout engine 40. The command framework 30 also manages default communication between the group collections 34, group view models 36, and user interface control view models 38 as required. The command developer handles this communication within the command 32 and view models 36, 38 without having to directly connect and manage that default communication.

Groups may be active or inactive. A group collection 34 or individual control may be initially inactive or hidden, and become active or shown only when relevant based on the current state of the user interface. For example, within a group collection 34 that supports an active group, while a group is not active its controls may be hidden and not shown. If the user selects that group, then its controls will be shown.

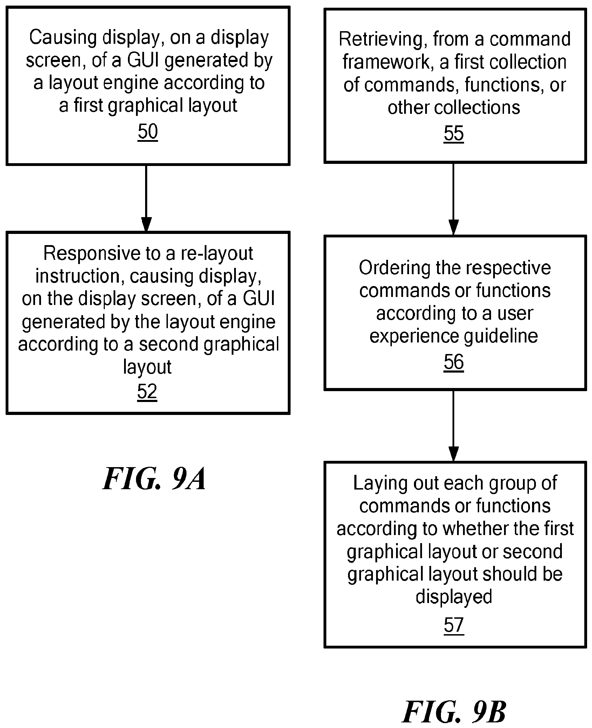

The layout engine 40 is responsible for processing the group collections 34 and view models 36, 38 to populate the user interface. In accordance with an embodiment of the invention, when laying out the GUI 10, the layout engine 40 operates algorithmically as follows, with reference to Fig. 9B. First, in a process 55, the layout algorithm retrieves, from the command 32 via the command framework 30, a sole top level group collection 34. This group collection 34 is processed, in process 56 of Fig. 9B, to order the groups according to user experience (UX) guidelines, which may include GUI standards such as element spacing, element sizing, and other standards defined by the software application developer or user. If any default groups are indicated by the command, such as a generic "Okay / Apply / Cancel" group for updating data, these groups are added to the ordering at this time.

Next, in process 57 of Fig. 9B, the groups of the command 32 are laid out in order. If any nested group collections 34 are found within a given group, they are recursively processed to form a nested layout, by repeating the processes of Fig. 9B beginning with process 55. If a group collection 34 is defined to support showing an active group, a default user interface is created for the groups themselves. For example, radio buttons or a split button with a drop down of buttons for each group may be provided in a default layout. After group collections 34 are processed, each group view model 36 is processed for the non-default controls. During this processing, individual UI controls such as text boxes, check boxes, and so on are placed in the layout according to a configuration of the UI control view model 36.

The algorithm for managing the specific rendering of the full (active component ribbon) layout 42 and compacted (mini-tab) layout 44 allows the layout engine 40 to defer some layout processing to the specifics of the layout type required. The algorithm for compacting (that is, for switching from the full layout 42 to the compacted layout 44) generally operates as follows. Default groups (such as "Okay / Apply / Cancel") are displayed in the mini-tab layout 44 with minimal information required to be usable for the application user. Generally this includes smaller size and less or no textual information. Each individual top level group is limited in the mini-tab layout 44 to a fixed size height and width. Each individual control view model 38 is additionally processed for minimalistic display, such as removing labels in favor of icons, and using smaller, more standardized sizing of controls. Display of other attributes and properties display is limited, and an overflow mechanism is provided to keep these attributes and properties within the bounding box of the display component 26. Specific group view models 36 and user interface control view models 38 provide additional information, such as compacted display sizing or other preferences, that can be used to further handle compacting the layout. The algorithm for converting from the compacted mini-tab layout 44 back to the full layout 42 generally operates in reverse, to expand the various displayed controls and add detail that was lost.

The above-described algorithms for the layout engine 40 provide several technical and other advantages. A primary advantage is that the ability to provide multiple layouts allows a user to tailor the experience of using the software application to his or her personal liking. Another advantage is that multiple layouts 42, 44 may be provided with no additional coding work on the part of the software developer. Thus, it will be appreciated that the layouts 42, 44 are described for purposes of illustration only, and that additional layouts advantageously may be automatically provided according to the needs of the particular software application. A third advantage is that these multiple layouts may be configured and reconfigured using tools well known in the art, including XML configuration files, without disturbing the underlying code. As is known in software development, the compiling process for converting source code into executable code may be time-consuming, so leaving the underlying source code intact shortens development time while providing the flexibility to try out different layouts. A fourth advantage is that grouping functions permits more efficient administration of the software development process. In particular, different function groups may be developed in parallel, or even under different administrative controls. Moreover, once a group of functions has been developed for a first command, it may be placed in a library of such groups and reused with another command. By grouping functions together, multiple cooperative functions may be reused wholesale as integrated components, reducing time-to-market and expense of the development process.

Fig. 9A is a flowchart showing processes of a method embodiment of the invention that configures a GUI 10 of a software application having a plurality of commands, and having the above-described advantages. In a first process 50, the method causes display of the GUI 10 on a display screen, the GUI 10 being generated by a layout engine according to a first graphical layout as indicated in Fig. 9B. As noted above, the first graphical layout includes a fixed area having an active command ribbon 21 in which is contained a first plurality of groups of controls 22 that represent a respective plurality of groups of functions, each function pertaining to a selected command in the plurality of commands. In a second process 52, the method receives, typically from a user by the GUI 10 having the first graphical layout, an instruction to re-layout the plurality of groups of controls 22 in a movable display component 26. In response, the method displays the GUI 10 to the user , the GUI 10 being generated by the layout engine according to a second graphical layout as indicated in Fig. 9B. In the second graphical layout, the plurality of groups of controls 22 are laid out in a display component 26, which, as noted above, is movable within the GUI 10 Moreover, a multi-command ribbon 18 is displayed in the fixed area, in which is contained a second plurality of grouped controls, each such control pertaining to a command in the plurality of commands (rather than functions of a particular, selected command). The software application includes program code for determining how to position each control within a layout, according to the instruction, and whether to display a group of controls 22 in the fixed area 21 of the GUI 10 (as shown in Figs. 2 and 3) or as the display component 26 that is movable within the GUI 10 (as shown in Figs. 4 and 5).

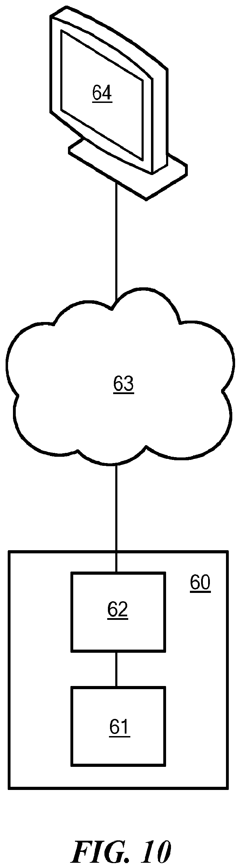

Fig. 10 schematically shows an apparatus 60 in which the invention may be embodied. The apparatus 60 includes at least one computing processor 61 that is communicatively coupled, via an output port 62 and a data communication link 63, to a display screen 64. The apparatus may be, for example, a server computer having hardware known in the art but that is specially configured in accordance with the techniques described herein. Thus, the computing processor 61 may be a specially configured microprocessor. The output port 62 and data communication link 63 may be, respectively a conventional video output port and video cable for communicating with a relatively nearby display screen 64, or a conventional data networking port and a data network (such as the Internet) for communicating with a relatively distant display screen 64. The display screen 64 may be conventional.

The at least one computing processor 61 is configured to cause display, on the display screen 64, of the GUI of the software application according to a first graphical layout (e.g. as shown in Fig. 1) that includes a fixed area having a contextual tab in which is contained a first plurality of grouped controls, each such control pertaining to a function of a selected command in the plurality of commands. The at least one computing processor 61 is also configured to be responsive to receiving a re-layout instruction from a user of the software application, by causing display, on the display screen 64, of the GUI according to a second graphical layout (e.g. as shown in Figs. 2-5) that includes (1) a movable component in which is contained the first plurality of grouped controls, and (2) a fixed area having a non-contextual tab in which is contained a second plurality of grouped controls, each such control pertaining to a command in the plurality of commands. The at least one computing processor 61 is configured to cause display of the GUI of the software application by executing a layout engine (e.g. as described above in connection with Fig. 8) that generates the GUI of the software application.

It should be appreciated that each of these components is operatively connected by any conventional interconnect mechanism. For example, in Fig. 10 a bus couples the computing processor 61 and the output port 62. Those skilled in the art should understand that this generalized representation can be modified to include other conventional direct or indirect connections. Indeed, it should be noted that Fig. 10 only schematically shows each of these components. Those skilled in the art should understand that each of these components can be implemented in a variety of conventional manners, such as by using hardware, software, or a combination of hardware and software, across one or more other functional components. For example, the apparatus 60 may be implemented using a plurality of microprocessors executing firmware. As another example, the apparatus 60 may be implemented using one or more application specific integrated circuits (i.e., "ASICs") and related software, or a combination of ASICs, discrete electronic components (e.g., transistors), and microprocessors. Accordingly, the representation of the apparatus 60 in a single box of Fig. 10 is for simplicity purposes only. In fact, in some embodiments, the apparatus 60 of Fig. 10 is distributed across a plurality of different server machines that are not necessarily within the same housing or chassis.

It should be reiterated that the representation of Fig. 10 is a significantly simplified representation of an actual apparatus 60. Those skilled in the art should understand that such a device may have many other physical and functional components, such as central processing units, volatile and non-volatile memory, input and output devices and other hardware, firmware to perform various functions, and software to perform various other functions.

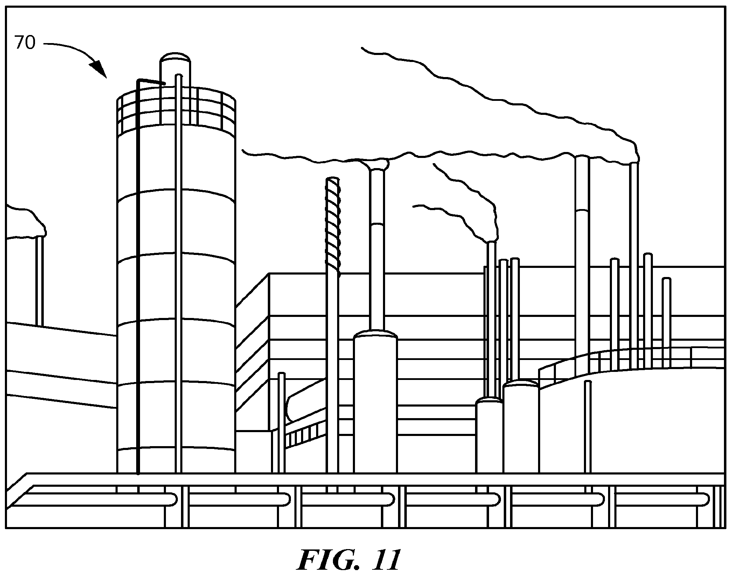

Illustrative embodiments may be implemented on a variety of different systems. Among others, illustrative embodiments may be implemented on a plant design program for developing a large-scale project. For example, Fig. 11 generally shows a part of one example of a large-scale capital project 70 (more generally a "capital project 70"). More specifically, as known by those skilled in the art, a capital project 70 generally is a long-term investment made to build, augment, add, or improve on a highly capital intensive project-it requires notable amounts of both financial capital and labor capital to undertake, and often takes years to complete. Capital projects 70 are often defined by their large-scale cost relative to other investments requiring less planning and resources (e.g., building a house or a truck). Both the private sector and public sector can be involved in a capital project 70. Some examples of capital projects 70 include developing and maintaining oil refineries, power plants, ships, offshore oil platforms, dams, and factories.

The capital project 70 shown in Fig. 11 is a power plant, which, as known by those skilled in the art, has an enormous number of different components that cooperate to accomplish its function of generating power. For example, among other things, the power plant of this figure has a plurality of large and small buildings, smokestacks, pipes, valves, fuel tanks, ladders, and electrical systems. Indeed, designing, building, and maintaining such a project requires vast amounts of planning and coordination. Without careful planning and coordination, the power plant may never have been built or operated.

To that end, those skilled in the art have developed the prior noted plant design programs/products ("plant design programs") to assist in planning/designing, developing, maintaining, and decommissioning capital projects 70, such as that shown in Fig. 11. One such widely used plant design program is known as the SmartPlant^{®} Enterprise product (hereinafter "SmartPlant^{®} product"), distributed by Intergraph, Inc. of Huntsville, Alabama. In a manner similar to other such products, the SmartPlant^{®} product has at least the following interrelated functions and components: 3D modeling and visualization; engineering and schematics; information management; procurement, fabrication, and construction; and open integration with other proprietary and open systems.

Accordingly, designers, engineers, developers, managers and other relevant parties use these and other features of plant design programs, such as the SmartPlant^{®} product, to design, build, update, manage, and decommission capital projects 70, such as the power plant shown in Fig. 11.

Various embodiments of the invention may be implemented at least in part in any conventional computer programming language. For example, in addition to the computer programming languages noted above, some embodiments may be implemented in a procedural programming language (e.g., "C"), or in an object oriented programming language (e.g., "C++"). Other embodiments of the invention may be implemented as a pre-configured, stand-along hardware element and/or as preprogrammed hardware elements (e.g., application specific integrated circuits, FPGAs, and digital signal processors), or other related components.

In an alternative embodiment, the disclosed apparatus and methods (e.g., see the flow chart described above) may be implemented as a computer program product for use with a computer system. Such implementation may include a series of computer instructions fixed either on a tangible, non-transitory medium, such as a computer readable medium (e.g., a diskette, CD-ROM, ROM, or fixed disk). The series of computer instructions can embody all or part of the functionality previously described herein with respect to the system.

Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies.

Among other ways, such a computer program product may be distributed as a removable medium with accompanying printed or electronic documentation (e.g., shrink wrapped software), preloaded with a computer system (e.g., on system ROM or fixed disk), or distributed from a server or electronic bulletin board over the network (e.g., the Internet or World Wide Web). In fact, some embodiments may be implemented in a software-as-a-service model ("SAAS") or cloud computing model. Of course, some embodiments of the invention may be implemented as a combination of both software (e.g., a computer program product) and hardware. Still other embodiments of the invention are implemented as entirely hardware, or entirely software.

## Claims

1. Apparatus for displaying a graphical user interface, GUI, (10) of a software application having a plurality of commands, each command (32) including a group collection (34) that defines one or more individual groups of functions, each group having a group view model (36) that defines a view model for the functions that are displayed in the group using a corresponding individual user interface, UI, control view model (38), the apparatus comprising at least one computing processor that is communicatively coupled to a display screen (64), the at least one computing processor being configured to:
cause display (50), on the display screen (64), of the GUI (10) of the software application according to a first graphical layout that includes a fixed area having a contextual tab (20) in which is contained a first plurality of grouped controls, each such control pertaining to a function of a command in the plurality of commands; and
receive a re-layout instruction from a user of the software application to cause display of the GUI (10) of the software application according to a second graphical layout that includes
a movable component (26) in which is contained the first plurality of grouped controls, and
a fixed area having a non-contextual tab in which is contained a second plurality of grouped controls, each such control pertaining to a command in the plurality of commands,
and responsive to receiving the re-layout instruction, cause display, on the display screen (64), of the GUI (10) of the software application according to the second graphical layout;
wherein a layout engine (40) generates the second graphical layout of the GUI (10) of the software application, the layout engine (40)
retrieving, from a command framework (30) information from a command (32), the command framework (30) configured manage default communication between the group collections (34), group view models (36), and user interface control view models (38),
processing the group collections (34) and view models (36, 38) to populate the user interface, wherein
each individual control view model (38) is processed for minimalistic display, such as removing labels in favor of icons and using smaller, more standardized sizing of controls,
display of attributes and properties display is limited,
an overflow mechanism is provided to keep the attributes and properties within a bounding box of the movable component (26), and
specific group view models (36) and user interface control view models (38) provide additional information, such as compacted display sizing, usable for further handle compacting the layout.

2. The apparatus according to claim 1, wherein the first graphical layout includes a group of commands or functions by showing a textual label, or by showing icons each having a first size, or both; and wherein the layout engine operates by:
generating the second graphical layout by laying out the commands or functions by not showing the textual label, and by showing icons each having a second size that is smaller than the first size.

3. The apparatus according to claim 1,
wherein the layout engine further operates by laying out the group of functions using a bounding box having a fixed width,
or
wherein retrieving, from a command framework, further includes retrieving a second collection, and the layout engine further operates by recursively processing the second collection to form a nested layout,
or
wherein the at least one computing processor is further configured to cause display, on the display screen (64), of the GUI (10) of the software application according to the first graphical layout, in response to receiving another re-layout instruction from the user of the software application,
or
wherein the apparatus further comprises a memory, wherein the at least one computing processor is further configured to store, in the memory, a datum indicating whether the GUI (10) should be displayed according to the first graphical layout or the second graphical layout.

4. A method of displaying, on a display screen (64), a graphical user interface, GUI, (10) of a software application having a plurality of commands, each command (32) including a group collection (34) that defines one or more individual groups of functions, each group having a group view model (36) that defines a view model for the functions that are displayed in the group using a corresponding individual user interface, UI, control view model 38, the method comprising:
causing display, on the display screen (64) by a computing processor, of the GUI (10) of the software application according to a first graphical layout that includes a fixed area having a contextual tab (20) in which is contained a first plurality of grouped controls, each such control pertaining to a function of a command in the plurality of commands;
receiving a re-layout instruction from a user of the software application to cause display of the GUI (10) of the software application according to a second graphical layout that includes a movable component (26) in which is contained the first plurality of grouped controls, and a fixed area having a non-contextual tab in which is contained a second plurality of grouped controls, each such control pertaining to a command in the plurality of commands; and
responsive to receiving the re-layout instruction, causing display, on the display screen (64) by the computing processor, of the GUI (10) of the software application according to the second graphical layout;
wherein a layout engine (40) generates the second graphical layout of the GUI (10) of the software application, the layout engine (40):
retrieving, from a command framework (30) information from a command (32), the command framework (30) configured manage default communication between the group collections (34), group view models (36), and user interface control view models (38),
the layout engine (40):
processing the group collections (34) and view models (36, 38) to populate the user interface, wherein:
a group collection (34) is processed to order the groups according to user experience, UX, guidelines;
each group view model (36) is processed; during this processing, individual UI controls are placed in the layout according to a configuration of the UI control view model (36); and
each individual control view model (38) is processed for minimalistic display, such as removing labels in favor of icons, and using smaller, more standardized sizing of controls,
display of attributes and properties display is limited,
an overflow mechanism is provided to keep the attributes and properties within a bounding box of the movable component (26), and
specific group view models (36) and user interface control view models (38) provide additional information, such as compacted display sizing, usable for further compacting the layout.

5. The method according to claim 4, wherein
the first graphical layout includes a group of commands or functions by showing a textual label, or by showing icons each having a first size, or both; and wherein the layout engine operates by
generating the second graphical layout by laying out the commands or functions by not showing the textual label, and by showing icons each having a second size that is smaller than the first size.

6. The method according to claim 4, wherein the layout engine further operates by:
laying out the group of functions using a bounding box having a fixed width.

7. The method according to claim 4, wherein retrieving, from a command framework, further includes retrieving a second collection, and the layout engine further operates by:
recursively processing the second collection to form a nested layout.

8. The method according to claim 4, further comprising:
causing display, on the display screen (64), of the GUI (10) of the software application according to the first graphical layout, in response to receiving another re-layout instruction from the user of the software application.

9. The method according to claim 4, further comprising storing, in a memory coupled to the computing processor, a datum indicating whether the GUI (10) should be displayed according to the first graphical layout or the second graphical layout.

10. The method according to claim 4, further comprising displaying the fixed area in the shape of a ribbon.

11. A tangible, computer-readable storage medium in which is non-transitorily stored program code that, when executed by a computing processor, provides a method of displaying, on a display screen (64), a graphical user interface, GUI, (10) of a software application having a plurality of commands, each command (32) including a group collection (34) that defines one or more individual groups of functions, each group having a group view model (36) that defines a view model for the functions that are displayed in the group using a corresponding individual user interface, UI, control view model 38, the method comprising:
causing display, on the display screen (64) by the computing processor, of the GUI (10) of the software application according to a first graphical layout that includes a fixed area having a contextual tab (20) in which is contained a first plurality of grouped controls, each such control pertaining to a function of a command in the plurality of commands; and
receiving a re-layout instruction from a user of the software application to cause display of the GUI (10) of the software application according to a second graphical layout that includes a movable component (26) in which is contained the first plurality of grouped controls, and a fixed area having a non-contextual tab in which is contained a second plurality of grouped controls, each such control pertaining to a command in the plurality of commands, and
responsive to receiving the re-layout instruction, causing display, on the display screen (64) by the computing processor, the GUI (10) of the software application according to the second graphical layout;
the layout engine (40) generates the second graphical layout by:
retrieving, from a command framework (30), information from a command (32), the command framework (30) configured manage default communication between the group collections (34), group view models (36), and user interface control view models (38),
processing the group collections (34) and view models (36, 38) to populate the user interface, wherein
each individual control view model (38) is processed for minimalistic display, such as removing labels in favor of icons and using smaller, more standardized sizing of controls,
display of attributes and properties display is limited,
an overflow mechanism is provided to keep the attributes and properties within a bounding box of the movable component (26), and
specific group view models (36) and user interface control view models (38) provide additional information, such as compacted display sizing, usable for further handle compacting the layout.

12. The storage medium according to claim 11, wherein
the first graphical layout includes a group of commands or functions by showing a textual label, or by showing icons each having a first size, or both; and wherein the layout engine operates by
generating the second graphical layout by laying out the commands or functions by not showing the textual label, and by showing icons each having a second size that is smaller than the first size.

13. The storage medium according to claim 11, wherein the layout engine further operates by:
laying out the group of functions using a bounding box having a fixed width.

14. The storage medium according to claim 11, wherein retrieving, from a command framework, further includes retrieving a second collection, and the layout engine further operates by:
recursively processing the second collection to form a nested layout.

15. The storage medium according to claim 11,
further comprising causing display, on the display screen (64), of the GUI (10) of the software application according to the first graphical layout, in response to receiving another re-layout instruction from the user of the software application,
or
further comprising storing, in a memory coupled to the computing processor, a datum indicating whether the GUI (10) should be displayed according to the first graphical layout or the second graphical layout,
or
further comprising displaying the fixed area in the shape of a ribbon.

## Patentansprüche

1. Vorrichtung zum Anzeigen einer grafischen Benutzeroberfläche, GUI, (10) einer Software-Anwendung, die eine Vielzahl von Befehlen aufweist, wobei jeder Befehl (32) eine Gruppensammlung (34) beinhaltet, die eine oder mehrere individuelle Gruppen von Funktionen definiert, wobei jede Gruppe ein Gruppenansichtsmodell (36) aufweist, das ein Ansichtsmodell für die Funktionen definiert, die in der Gruppe unter Verwendung eines jeweiligen individuellen Benutzerschnittstellen-Steueransichtsmodells (38) angezeigt werden, wobei die Vorrichtung mindestens einen Rechenprozessor umfasst, der kommunikativ mit einem Anzeigebildschirm (64) gekoppelt ist, wobei der mindestens eine Rechenprozessor zu Folgendem konfiguriert ist:
Bewirken einer Anzeige (50) der GUI (10) der Software-Anwendung auf dem Anzeigebildschirm (64) gemäß einer ersten grafischen Anordnung, die einen festen Bereich beinhaltet, der eine Kontextregisterkarte (20) aufweist, in der eine erste Vielzahl von gruppierten Steuerelementen enthalten ist, wobei jedes derartige Steuerelement zu einer Funktion eines Befehls in der Vielzahl von Befehlen gehört; und
Empfangen einer Neuanordnungsanweisung von einem Benutzer der Software-Anwendung, um eine Anzeige der GUI (10) der Software-Anwendung gemäß einer zweiten grafischen Anordnung zu bewirken, die Folgendes beinhaltet:
eine bewegliche Komponente (26), in der die erste Vielzahl von gruppierten Steuerelementen enthalten ist, und
einen festen Bereich, der eine Nichtkontextregisterkarte aufweist, in der eine zweite Vielzahl von gruppierten Steuerelementen enthalten ist, wobei jedes derartige Steuerelement zu einem Befehl in der Vielzahl von Befehlen gehört,
und als Reaktion auf das Empfangen der Neuanordnungsanweisung, Bewirken einer Anzeige der GUI (10) der Software-Anwendung auf dem Anzeigebildschirm (64) gemäß der zweiten grafischen Anordnung;
wobei eine Anordnungs-Engine (40) die zweite grafische Anordnung der GUI (10) der Software-Anwendung erzeugt, wobei die Anordnungs-Engine (40) Folgendes ausführt:
Abrufen, von einem Befehls-Framework (30), von Informationen von einem Befehl (32), wobei der Befehls-Framework (30) dazu konfiguriert ist, Standardkommunikation zwischen den Gruppensammlungen (34), Gruppenansichtsmodellen (36) und Benutzerschnittstellen-Steueransichtsmodellen (38) zu verwalten,
Verarbeiten der Gruppensammlungen (34) und Ansichtsmodelle (36, 38), um die Benutzerschnittstelle zu befüllen, wobei
jedes individuelle Steueransichtsmodell (38) für eine minimalistische Anzeige verarbeitet wird, wie etwa durch Entfernen von Bezeichnungen zugunsten von Symbolen und Verwenden von kleineren, standardisierteren Dimensionierungen von Steuerelementen,
die Anzeige von Attributen und Anzeige von Eigenschaften eingeschränkt ist,
ein Überlaufmechanismus bereitgestellt wird, um die Attribute und Eigenschaften innerhalb eines Begrenzungsrahmens der beweglichen Komponente (26) zu halten, und
spezifische Gruppenansichtsmodelle (36) und Benutzerschnittstellen-Steueransichtsmodelle (38) zusätzliche Informationen bereitstellen, wie etwa eine verdichtete Anzeigedimensionierung, die für die weitere Bearbeitung zum Verdichten der Anordnung verwendbar sind.

2. Vorrichtung nach Anspruch 1, wobei die erste grafische Anordnung eine Gruppe von Befehlen oder Funktionen durch Anzeigen einer Textbezeichnung oder durch Anzeigen von Symbolen, die jeweils eine erste Größe aufweisen, oder beides beinhaltet; und wobei die Anordnungs-Engine durch Folgendes betrieben wird:
Erzeugen der zweiten grafischen Anordnung durch Anordnen der Befehle oder Funktionen, durch Nichtanzeigen der Textbezeichnung und durch Anzeigen von Symbolen, die jeweils eine zweite Größe aufweisen, die kleiner als die erste Größe ist.

3. Vorrichtung nach Anspruch 1,
wobei die Anordnungs-Engine ferner durch Anordnen der Gruppe von Funktionen unter Verwendung eines Begrenzungsrahmens, der eine feste Breite aufweist, betrieben wird,
oder
wobei das Abrufen, von einem Befehls-Framework, ferner Abrufen einer zweiten Sammlung beinhaltet und die Anordnungs-Engine ferner durch rekursives Verarbeiten der zweiten Sammlung betrieben wird, um eine geschachtelte Anordnung zu bilden,
oder
wobei der mindestens eine Rechenprozessor ferner dazu konfiguriert ist, eine Anzeige der GUI (10) der Software-Anwendung auf dem Anzeigebildschirm (64) gemäß der ersten grafischen Anordnung als Reaktion auf das Empfangen einer weiteren Neuanordnungsanweisung von dem Benutzer der Software-Anwendung zu bewirken,
oder
wobei die Vorrichtung ferner einen Speicher umfasst, wobei der mindestens eine Rechenprozessor ferner dazu konfiguriert ist, in dem Speicher ein Datenelement zu speichern, das angibt, ob die GUI (10) gemäß der ersten grafischen Anordnung oder der zweiten grafischen Anordnung angezeigt werden soll.

4. Verfahren zum Anzeigen einer grafischen Benutzeroberfläche, GUI, (10) einer Software-Anwendung, die eine Vielzahl von Befehlen aufweist, auf einem Anzeigebildschirm (64), wobei jeder Befehl (32) eine Gruppensammlung (34) beinhaltet, die eine oder mehrere individuelle Gruppen von Funktionen definiert, wobei jede Gruppe ein Gruppenansichtsmodell (36) aufweist, das ein Ansichtsmodell für die Funktionen definiert, die in der Gruppe unter Verwendung eines jeweiligen individuellen Benutzerschnittstellen-Steueransichtsmodells (38) angezeigt werden, wobei das Verfahren Folgendes umfasst:
Bewirken einer Anzeige der GUI (10) der Software-Anwendung auf dem Anzeigebildschirm (64) durch einen Rechenprozessor gemäß einer ersten grafischen Anordnung, die einen festen Bereich beinhaltet, der eine Kontextregisterkarte (20) aufweist, in der eine erste Vielzahl von gruppierten Steuerelementen enthalten ist, wobei jedes derartige Steuerelement zu einer Funktion eines Befehls in der Vielzahl von Befehlen gehört;
Empfangen einer Neuanordnungsanweisung von einem Benutzer der Software-Anwendung, um eine Anzeige der GUI (10) der Software-Anwendung gemäß einer zweiten grafischen Anordnung zu bewirken, die eine bewegliche Komponente (26), in der die erste Vielzahl von gruppierten Steuerelementen enthalten ist, und einen festen Bereich, der eine Nichtkontextregisterkarte aufweist, in der eine zweite Vielzahl von gruppierten Steuerelementen enthalten ist, beinhaltet, wobei jedes derartige Steuerelement zu einem Befehl in der Vielzahl von Befehlen gehört; und
als Reaktion auf das Empfangen der Neuanordnungsanweisung, Bewirken einer Anzeige der GUI (10) der Software-Anwendung auf dem Anzeigebildschirm (64) durch den Rechenprozessor gemäß der zweiten grafischen Anordnung;
wobei eine Anordnungs-Engine (40) die zweite grafische Anordnung der GUI (10) der Software-Anwendung erzeugt, wobei die Anordnungs-Engine (40) Folgendes ausführt:
Abrufen, von einem Befehls-Framework (30), von Informationen von einem Befehl (32), wobei der Befehls-Framework (30) dazu konfiguriert ist, Standardkommunikation zwischen den Gruppensammlungen (34), Gruppenansichtsmodellen (36) und Benutzerschnittstellen-Steueransichtsmodellen (38) zu verwalten,
wobei die Anordnungs-Engine (40) Folgendes ausführt:
Verarbeiten der Gruppensammlungen (34) und Ansichtsmodelle (36, 38), um die Benutzerschnittstelle zu befüllen, wobei:
eine Gruppensammlung (34) verarbeitet wird, um die Gruppen gemäß Benutzererlebnis-Richtlinien zu ordnen;
jedes Gruppenansichtsmodell (36) verarbeitet wird; während dieser Verarbeitung individuelle Benutzerschnittstellen-Steuerelemente in der Anordnung gemäß einer Konfiguration des Benutzerschnittstellen-Steueransichtsmodels (38) positioniert werden; und
jedes individuelle Steueransichtsmodell (38) für eine minimalistische Anzeige verarbeitet wird, wie etwa durch Entfernen von Bezeichnungen zugunsten von Symbolen und Verwenden von kleineren, standardisierteren Dimensionierungen von Steuerelementen,
die Anzeige von Attributen und Anzeige von Eigenschaften eingeschränkt ist,
ein Überlaufmechanismus bereitgestellt wird, um die Attribute und Eigenschaften innerhalb eines Begrenzungsrahmens der beweglichen Komponente (26) zu halten, und
spezifische Gruppenansichtsmodelle (36) und Benutzerschnittstellen-Steueransichtsmodelle (38) zusätzliche Informationen bereitstellen, wie etwa eine verdichtete Anzeigedimensionierung, die für das weitere Verdichten der Anordnung verwendbar sind.

5. Verfahren nach Anspruch 4, wobei
die erste grafische Anordnung eine Gruppe von Befehlen oder Funktionen durch Anzeigen einer Textbezeichnung oder durch Anzeigen von Symbolen, die jeweils eine erste Größe aufweisen, oder beides beinhaltet; und wobei die Anordnungs-Engine durch Folgendes betrieben wird:
Erzeugen der zweiten grafischen Anordnung durch Anordnen der Befehle oder Funktionen durch Nichtanzeigen der Textbezeichnung und durch Anzeigen von Symbolen, die jeweils eine zweite Größe aufweisen, die kleiner als die erste Größe ist.

6. Verfahren nach Anspruch 4, wobei die Layout-Engine ferner durch Folgendes betrieben wird:
Anordnen der Gruppe von Funktionen unter Verwendung eines Begrenzungsrahmens, der eine feste Breite aufweist.

7. Verfahren nach Anspruch 4, wobei das Abrufen, von einem Befehls-Framework, ferner Abrufen einer zweiten Sammlung beinhaltet und die Anordnungs-Engine ferner durch Folgendes betrieben wird:
rekursives Verarbeiten der zweiten Sammlung, um eine geschachtelte Anordnung zu bilden.

8. Verfahren nach Anspruch 4, das ferner Folgendes umfasst:
Bewirken einer Anzeige der GUI (10) der Software-Anwendung auf dem Anzeigebildschirm (64) gemäß der ersten grafischen Anordnung als Reaktion auf das Empfangen einer weiteren Neuanordnungsanweisung von dem Benutzer der Software-Anwendung.

9. Verfahren nach Anspruch 4, das ferner Speichern eines Datenelements, das angibt, ob die GUI (10) gemäß der ersten grafischen Anordnung oder der zweiten grafischen Anordnung angezeigt werden soll, in einem Speicher, der mit dem Rechenprozessor gekoppelt ist, umfasst.

10. Verfahren nach Anspruch 4, das ferner Anzeigen des festen Bereichs in der Form eines Bands umfasst.

11. Physisches computerlesbares Speichermedium, in dem sich nicht flüchtig gespeicherter Programmcode befindet, der bei Ausführung durch einen Rechenprozessor ein Verfahren zum Anzeigen einer grafischen Benutzeroberfläche, GUI, (10) einer Software-Anwendung, die eine Vielzahl von Befehlen aufweist, auf einem Anzeigebildschirm (64) bereitstellt, wobei jeder Befehl (32) eine Gruppensammlung (34) beinhaltet, die eine oder mehrere individuelle Gruppen von Funktionen definiert, wobei jede Gruppe ein Gruppenansichtsmodell (36) aufweist, das ein Ansichtsmodell für die Funktionen definiert, die in der Gruppe unter Verwendung eines jeweiligen individuellen Benutzerschnittstellen-Steueransichtsmodels (38) angezeigt werden, wobei das Verfahren Folgendes umfasst:
Bewirken einer Anzeige der GUI (10) der Software-Anwendung auf dem Anzeigebildschirm (64) durch den Rechenprozessor gemäß einer ersten grafischen Anordnung, die einen festen Bereich beinhaltet, der eine Kontextregisterkarte (20) aufweist, in der eine erste Vielzahl von gruppierten Steuerelementen enthalten ist, wobei jedes derartige Steuerelement zu einer Funktion eines Befehls in der Vielzahl von Befehlen gehört; und
Empfangen einer Neuanordnungsanweisung von einem Benutzer der Software-Anwendung, um eine Anzeige der GUI (10) der Software-Anwendung gemäß einer zweiten grafischen Anordnung zu bewirken, die eine bewegliche Komponente (26), in der die erste Vielzahl von gruppierten Steuerelementen enthalten ist, und einen festen Bereich, der eine Nichtkontextregisterkarte aufweist, in der eine zweite Vielzahl von gruppierten Steuerelementen enthalten ist, beinhaltet, wobei jedes derartige Steuerelement zu einem Befehl in der Vielzahl von Befehlen gehört; und
als Reaktion auf das Empfangen der Neuanordnungsanweisung, Bewirken einer Anzeige der GUI (10) der Software-Anwendung auf dem Anzeigebildschirm (64) durch den Rechenprozessor gemäß der zweiten grafischen Anordnung;
die Anordnungs-Engine (40) erzeugt die zweite grafische Anordnung durch Folgendes:
Abrufen, von einem Befehls-Framework (30), von Informationen von einem Befehl (32), wobei der Befehls-Framework (30) dazu konfiguriert ist, Standardkommunikation zwischen den Gruppensammlungen (34), Gruppenansichtsmodellen (36) und Benutzerschnittstellen-Steueransichtsmodellen (38) zu verwalten,
Verarbeiten der Gruppensammlungen (34) und Ansichtsmodelle (36, 38), um die Benutzerschnittstelle zu befüllen, wobei
jedes individuelle Steueransichtsmodell (38) für eine minimalistische Anzeige verarbeitet wird, wie etwa durch Entfernen von Bezeichnungen zugunsten von Symbolen und Verwenden von kleineren, standardisierteren Dimensionierungen von Steuerelementen,
die Anzeige von Attributen und Anzeige von Eigenschaften eingeschränkt ist,
ein Überlaufmechanismus bereitgestellt wird, um die Attribute und Eigenschaften innerhalb eines Begrenzungsrahmens der beweglichen Komponente (26) zu halten, und
spezifische Gruppenansichtsmodelle (36) und Benutzerschnittstellen-Steueransichtsmodelle (38) zusätzliche Informationen bereitstellen, wie etwa eine verdichtete Anzeigedimensionierung, die für die weitere Bearbeitung zum Verdichten der Anordnung verwendbar sind.

12. Speichermedium nach Anspruch 11, wobei
die erste grafische Anordnung eine Gruppe von Befehlen oder Funktionen durch Anzeigen einer Textbezeichnung oder durch Anzeigen von Symbolen, die jeweils eine erste Größe aufweisen, oder beides beinhaltet; und wobei die Anordnungs-Engine durch Folgendes betrieben wird:
Erzeugen der zweiten grafischen Anordnung durch Anordnen der Befehle oder Funktionen durch Nichtanzeigen der Textbezeichnung und durch Anzeigen von Symbolen, die jeweils eine zweite Größe aufweisen, die kleiner als die erste Größe ist.

13. Speichermedium nach Anspruch 11, wobei die Anordnungs-Engine ferner durch Folgendes betrieben wird:
Anordnen der Gruppe von Funktionen unter Verwendung eines Begrenzungsrahmens, der eine feste Breite aufweist.

14. Speichermedium nach Anspruch 11, wobei das Abrufen, von einem Befehls-Framework, ferner Abrufen einer zweiten Sammlung beinhaltet und die Anordnungs-Engine ferner durch Folgendes betrieben wird:
rekursives Verarbeiten der zweiten Sammlung, um eine geschachtelte Anordnung zu bilden.

15. Speichermedium nach Anspruch 11,
das ferner Bewirken einer Anzeige der GUI (10) der Software-Anwendung auf dem Anzeigebildschirm (64) gemäß der ersten grafischen Anordnung als Reaktion auf das Empfangen einer weiteren Neuanordnungsanweisung von dem Benutzer der Software-Anwendung umfasst
oder
das ferner Speichern eines Datenelements, das angibt, ob die GUI (10) gemäß der ersten grafischen Anordnung oder der zweiten grafischen Anordnung angezeigt werden soll, in einem Speicher, der mit dem Rechenprozessor gekoppelt ist, umfasst,
oder
das ferner Anzeigen des festen Bereichs in der Form eines Bands umfasst.

## Revendications

1. Appareil pour afficher une interface utilisateur graphique, GUI, (10) d'une application logicielle comportant une pluralité d'ordres, chaque ordre (32) incluant une collection de groupes (34) qui définit un ou plusieurs groupes individuels de fonctions, chaque groupe ayant un modèle de vue de groupe (36) qui définit un modèle de vue pour les fonctions qui sont affichées dans le groupe en utilisant un modèle de vue de commande (38) d'interface utilisateur, Ul, individuel correspondant, l'appareil comprenant au moins un processeur informatique qui est couplé de manière communicative à un écran d'affichage (64), ledit au moins un processeur informatique étant configuré pour :
faire afficher (50), sur l'écran d'affichage (64), la GUI (10) de l'application logicielle selon une première disposition graphique qui inclut une zone fixe ayant un onglet contextuel (20) dans lequel est contenue une première pluralité de commandes groupées, chacune de ces commandes se rapportant à une fonction d'un ordre de la pluralité d'ordres ; et
recevoir une instruction de réorganisation de la part d'un utilisateur de l'application logicielle pour faire afficher la GUI (10) de l'application logicielle selon une seconde disposition graphique qui inclut
un composant mobile (26) dans lequel est contenue la première pluralité de commandes groupées, et
une zone fixe ayant un onglet non contextuel dans lequel est contenue une seconde pluralité de commandes groupées, chacune de ces commandes se rapportant à un ordre de la pluralité d'ordres,
et en réponse à la réception de l'instruction de réorganisation, faire afficher, sur l'écran d'affichage (64), la GUI (10) de l'application logicielle selon la seconde disposition graphique ;
dans lequel un moteur de disposition (40) génère la seconde disposition graphique de la GUI (10) de l'application logicielle, le moteur de disposition (40)
récupérant, à partir d'un framework d'ordres (30), les informations d'un ordre (32), le framework d'ordres (30) étant configuré pour gérer la communication par défaut entre les collections de groupes (34), les modèles de vue de groupe (36) et les modèles de vue de commande d'interface utilisateur (38),
traitant les collections de groupes (34) et les modèles de vue (36, 38) pour remplir l'interface utilisateur, dans lequel
chaque modèle de vue de commande individuel (38) est traité pour un affichage minimaliste, par exemple en supprimant les étiquettes au profit d'icônes et en utilisant des commandes de taille plus petite et plus standardisée,
l'affichage des attributs et des propriétés est limité,
un mécanisme de débordement est prévu pour maintenir les attributs et les propriétés dans une boîte de délimitation du composant mobile (26), et
des modèles de vue de groupe (36) et des modèles de vue de commande d'interface utilisateur (38) spécifiques fournissent des informations supplémentaires, telles que la taille d'affichage compactée, utilisables pour compacter davantage la disposition.

2. Appareil selon la revendication 1, dans lequel la première disposition graphique inclut un groupe d'ordres ou de fonctions en affichant une étiquette textuelle, ou en affichant des icônes ayant chacune une première taille, ou les deux ; et dans lequel le moteur de disposition opère en :
générant la seconde disposition graphique en disposant les ordres ou les fonctions sans afficher l'étiquette textuelle, et en affichant des icônes ayant chacune une seconde taille inférieure à la première taille.

3. Appareil selon la revendication 1,
dans lequel le moteur de disposition opère en outre en disposant le groupe de fonctions en utilisant une boîte de délimitation ayant une largeur fixe,
ou
dans lequel récupérer, à partir d'un framework d'ordres, consiste en outre à récupérer une seconde collection, et le moteur de disposition opère en outre en traitant récursivement la seconde collection pour former une disposition imbriquée,
ou
dans lequel ledit au moins un processeur informatique est en outre configuré pour faire afficher, sur l'écran d'affichage (64), la GUI (10) de l'application logicielle selon la première disposition graphique, en réponse à la réception d'une autre instruction de réorganisation de la part de l'utilisateur de l'application logicielle,
ou
dans lequel l'appareil comprend en outre une mémoire, dans lequel ledit au moins un processeur informatique est en outre configuré pour stocker, dans la mémoire, une donnée indiquant si la GUI (10) doit être affichée selon la première disposition graphique ou la seconde disposition graphique.

4. Procédé pour afficher, sur un écran d'affichage (64), une interface utilisateur graphique, GUI, (10) d'une application logicielle comportant une pluralité d'ordres, chaque ordre (32) incluant une collection de groupes (34) qui définit un ou plusieurs groupes individuels de fonctions, chaque groupe ayant un modèle de vue de groupe (36) qui définit un modèle de vue pour les fonctions qui sont affichées dans le groupe en utilisant un modèle de vue de commande (38) d'interface utilisateur, Ul, individuel correspondant, le procédé consistant à :
faire afficher, sur l'écran d'affichage (64), par un processeur informatique, la GUI (10) de l'application logicielle selon une première disposition graphique qui inclut une zone fixe ayant un onglet contextuel (20) dans lequel est contenue une première pluralité de commandes groupées, chacune de ces commandes se rapportant à une fonction d'un ordre de la pluralité d'ordres ; et
recevoir une instruction de réorganisation de la part d'un utilisateur de l'application logicielle pour faire afficher la GUI (10) de l'application logicielle selon une seconde disposition graphique qui inclut un composant mobile (26) dans lequel est contenue la première pluralité de commandes groupées, et une zone fixe ayant un onglet non contextuel dans lequel est contenue une seconde pluralité de commandes groupées, chacune de ces commandes se rapportant à un ordre de la pluralité d'ordres ; et
en réponse à la réception de l'instruction de réorganisation, faire afficher, sur l'écran d'affichage (64), par le processeur informatique, la GUI (10) de l'application logicielle selon la seconde disposition graphique ;
dans lequel un moteur de disposition (40) génère la seconde disposition graphique de la GUI (10) de l'application logicielle, le moteur de disposition (40) :
récupérant, à partir d'un framework d'ordres (30), les informations d'un ordre (32), le framework d'ordres (30) étant configuré pour gérer la communication par défaut entre les collections de groupes (34), les modèles de vue de groupe (36) et les modèles de vue de commande d'interface utilisateur (38),
le moteur de disposition (40) :
traitant les collections de groupes (34) et les modèles de vue (36, 38) pour remplir l'interface utilisateur, dans lequel :
une collection de groupes (34) est traitée pour ordonner les groupes selon des directives d'expérience utilisateur ;
chaque modèle de vue de groupe (36) est traité ; au cours de ce traitement, des commandes d'interface utilisateur individuelles sont placées dans la disposition selon une configuration du modèle de vue de commande d'interface utilisateur (36) ; et
chaque modèle de vue de commande individuel (38) est traité pour un affichage minimaliste, par exemple en supprimant les étiquettes au profit d'icônes et en utilisant des commandes de taille plus petite et plus standardisée,
l'affichage des attributs et des propriétés est limité,
un mécanisme de débordement est prévu pour maintenir les attributs et les propriétés dans une boîte de délimitation du composant mobile (26), et
des modèles de vue de groupe (36) et des modèles de vue de commande d'interface utilisateur (38) spécifiques fournissent des informations supplémentaires, telles que la taille d'affichage compactée, utilisables pour compacter davantage la disposition.

5. Procédé selon la revendication 4, dans lequel
la première disposition graphique inclut un groupe d'ordres ou de fonctions en affichant une étiquette textuelle, ou en affichant des icônes ayant chacune une première taille, ou les deux ; et dans lequel le moteur de disposition opère en
générant la seconde disposition graphique en disposant les ordres ou les fonctions sans afficher l'étiquette textuelle, et en affichant des icônes ayant chacune une seconde taille qui est plus petite que la première taille.

6. Procédé selon la revendication 4, dans lequel le moteur de disposition opère en outre en :
disposant le groupe de fonctions en utilisant une boîte de délimitation ayant une largeur fixe.

7. Procédé selon la revendication 4, dans lequel récupérer, à partir d'un framework d'ordres, consiste en outre à récupérer une seconde collection, et le moteur de disposition opère en outre en :
traitant récursivement la seconde collection pour former une disposition imbriquée.

8. Procédé selon la revendication 4, consistant en outre à :
faire afficher, sur l'écran d'affichage (64), la GUI (10) de l'application logicielle selon la première disposition graphique, en réponse à la réception d'une autre instruction de réorganisation de la part de l'utilisateur de l'application logicielle.

9. Procédé selon la revendication 4, consistant en outre à stocker, dans une mémoire couplée au processeur informatique, une donnée indiquant si la GUI (10) doit être affichée selon la première disposition graphique ou la seconde disposition graphique.

10. Procédé selon la revendication 4, consistant en outre à afficher la zone fixe sous la forme d'un ruban.

11. Support de stockage tangible, lisible par ordinateur, dans lequel est stocké de manière non transitoire un code de programme qui, lorsqu'il est exécuté par un processeur informatique, fournit un procédé pour afficher, sur un écran d'affichage (64), une interface utilisateur graphique, GUI, (10) d'une application logicielle comportant une pluralité d'ordres, chaque ordre (32) incluant une collection de groupes (34) qui définit un ou plusieurs groupes individuels de fonctions, chaque groupe ayant un modèle de vue de groupe (36) qui définit un modèle de vue pour les fonctions qui sont affichées dans le groupe en utilisant un modèle de vue de commande d'interface utilisateur (38), Ul, individuel correspondant, le procédé consistant à :
faire afficher, sur l'écran d'affichage (64), par le processeur informatique, la GUI (10) de l'application logicielle selon une première disposition graphique qui inclut une zone fixe ayant un onglet contextuel (20) dans lequel est contenue une première pluralité de commandes groupées, chacune de ces commandes se rapportant à une fonction d'un ordre de la pluralité d'ordres ; et
recevoir une instruction de réorganisation de la part d'un utilisateur de l'application logicielle pour faire afficher la GUI (10) de l'application logicielle selon une seconde disposition graphique qui inclut un composant mobile (26) dans lequel est contenue la première pluralité de commandes groupées, et une zone fixe ayant un onglet non contextuel dans lequel est contenue une seconde pluralité de commandes groupées, chacune de ces commandes se rapportant à un ordre de la pluralité d'ordres ; et
en réponse à la réception de l'instruction de réorganisation, faire afficher, sur l'écran d'affichage (64), par le processeur informatique, la GUI (10) de l'application logicielle selon la seconde disposition graphique ;
le moteur de disposition (40) génère la seconde disposition graphique en :
récupérant, à partir d'un framework d'ordres (30), les informations d'un ordre (32), le framework d'ordres (30) étant configuré pour gérer la communication par défaut entre les collections de groupes (34), les modèles de vue de groupe (36) et les modèles de vue de commande d'interface utilisateur (38),
traitant les collections de groupes (34) et les modèles de vue (36, 38) pour remplir l'interface utilisateur, dans lequel
chaque modèle de vue de commande individuel (38) est traité pour un affichage minimaliste, par exemple en supprimant les étiquettes au profit d'icônes et en utilisant des commandes de taille plus petite et plus standardisée,
l'affichage des attributs et des propriétés est limité,
un mécanisme de débordement est prévu pour maintenir les attributs et les propriétés dans une boîte de délimitation du composant mobile (26), et
des modèles de vue de groupe (36) et des modèles de vue de commande d'interface utilisateur (38) spécifiques fournissent des informations supplémentaires, telles que la taille d'affichage compactée, utilisables pour compacter davantage la disposition.

12. Support de stockage selon la revendication 11, dans lequel
la première disposition graphique inclut un groupe d'ordres ou de fonctions en affichant une étiquette textuelle, ou en affichant des icônes ayant chacune une première taille, ou les deux ; et dans lequel le moteur de disposition opère en
générant la seconde disposition graphique en disposant les ordres ou les fonctions sans afficher l'étiquette textuelle, et en affichant des icônes ayant chacune une seconde taille qui est plus petite que la première taille.

13. Support de stockage selon la revendication 11, dans lequel le moteur de disposition opère en outre en :
disposant le groupe de fonctions en utilisant une boîte de délimitation ayant une largeur fixe.

14. Support de stockage selon la revendication 11, dans lequel récupérer, à partir d'un framework d'ordres, consiste en outre à récupérer une seconde collection, et le moteur de disposition opère en outre en :
traitant récursivement la seconde collection pour former une disposition imbriquée.

15. Support de stockage selon la revendication 11,
consistant en outre à faire afficher, sur l'écran d'affichage (64), la GUI (10) de l'application logicielle selon la première disposition graphique, en réponse à la réception d'une autre instruction de réorganisation de la part de l'utilisateur de l'application logicielle,
ou
consistant en outre à stocker, dans une mémoire couplée au processeur informatique, une donnée indiquant si la GUI (10) doit être affichée selon la première disposition graphique ou la seconde disposition graphique,
ou
consistant en outre à afficher la zone fixe sous la forme d'un ruban.
